(19) Europäisches Patentamt / European Patent Office / Office européen des brevets

(11) **EP 4 628 549 A1**

(12) **EUROPEAN PATENT APPLICATION**
published in accordance with Art. 153(4) EPC

(43) Date of publication:
**08.10.2025 Bulletin 2025/41**

(21) Application number: 23897483.6

(22) Date of filing: **14.11.2023**

(51) International Patent Classification (IPC):
*C09C 1/48* (2006.01)   *B60C 1/00* (2006.01)
*C01B 32/05* (2017.01)   *C08J 11/12* (2006.01)
*C08K 3/04* (2006.01)   *C08L 21/00* (2006.01)

(52) Cooperative Patent Classification (CPC):
**B60C 1/00; C01B 32/05; C08J 11/12; C08K 3/04;
C08L 21/00; C09C 1/48;** Y02T 10/86

(86) International application number:
**PCT/JP2023/040956**

(87) International publication number:
**WO 2024/116832 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 JP 2022192128**

(71) Applicant: **BRIDGESTONE CORPORATION**
**Chuo-ku**
**Tokyo 104-8340 (JP)**

(72) Inventor: **OKINAGA Yuki**
**Tokyo 104-8340 (JP)**

(74) Representative: **Marks & Clerk LLP**
**15 Fetter Lane**
**London EC4A 1BW (GB)**

(54) **RECYCLED CARBON BLACK, RUBBER COMPOSITION, AND TIRE**

(57)   The problem to be solved by the present disclosure is to provide recovered carbon black that enables the production of a tire excellent in breaking resistance and excellent in reinforcing characteristic, a rubber composition containing the recovered carbon black, and a tire produced from the rubber composition. The solution is recovered carbon black having a carbon content of 85 mass% or more and 97 mass% or less, an ash content of 0.5 mass% or more and 10 mass% or less, and a statistical thickness specific surface area of 50 $m^2$/g or more.

EP 4 628 549 A1

**Description**

TECHNICAL FIELD

The present disclosure relates to recovered carbon black obtained by recovering from waste. The present disclosure also relates to a rubber composition using the recovered carbon black, and a tire obtained by using the rubber composition.

BACKGROUND

In recent years, research on recycling and sustainable materials has been actively conducted to realize a sustainable society. Studies on recycling and the effective utilization of used tires are also underway. In particular, it is important to recover carbon black from used tires as a useful material. As a method for recovering carbon black from used tires, the thermal decomposition treatment described in PLTs 1 to 3 can be mentioned.

Incidentally, recovered carbon black recovered by recycling (hereinafter referred to as "recovered carbon black") contains, as impurities, metal components, inorganic components, organic components, etc. that were contained in the tire. When recovered carbon black is used in rubber production, it is known that due to the influence of impurities, various mechanical properties such as reinforcing characteristic and breaking resistance performance are reduced compared to carbon black that is not recycled (so-called "virgin" carbon black). Various investigations have been conducted to suppress the decrease in such physical properties.

For example, PLT 1 discloses a method for producing recovered carbon black capable of improving reinforcing characteristic when blended into a rubber composition, by uniformly and efficiently thermally decomposing polymer-based waste such as rubber materials.

PLT 2 discloses improvements in wear resistance and processability of a rubber composition by using recovered carbon black containing a zinc compound content of which is not greater than a given value.

Additionally, PLT 3 discloses the production of carbon black obtained from rubber decomposition oil generated by thermally decomposing rubber waste. It is disclosed that the carbon black of PLT 3 has an ash content of 0.1 to 10 mass%, and the breaking resistance performance of the rubber composition is improved by using such carbon black.

CITATION LIST

Patent Literature

> PLT 1: JP 2012-162672 A
> PLT 2: JP 2012-1682 A
> PLT 3: JP 2017-8223 A

SUMMARY

(Technical Problem)

However, there has been room for improvement because, even when the content of impurities is controlled as described above, it is still difficult to achieve sufficient mechanical properties with rubber using conventional recovered carbon black compared to cases where non-recovered carbon black is used.

The present disclosure has been made in view of the above problem, and an object thereof is to provide recovered carbon black that enables the production of a tire excellent in breaking resistance and excellent in reinforcing characteristic.

Another object of the present disclosure is to provide a rubber composition containing the recovered carbon black, and a tire produced from the rubber composition.

(Solution to Problem)

To address the above problem, the present disclosure provides the following [1] to [5].

> [1] Recovered carbon black having a carbon content of 85 mass% or more and 97 mass% or less, an ash content of 0.5 mass% or more and 10 mass% or less, and

a statistical thickness specific surface area of 50 m$^2$/g or more.

[2] The recovered carbon black according to [1], obtained from pyrolysis residue generated by thermally decomposing a rubber product containing carbon black.

[3] The recovered carbon black according to [1] or [2], wherein the ash content is 5 mass% or less.

[4] A rubber composition comprising the recovered carbon black according to any one of [1] to [3].

[5] A tire comprising the rubber composition according to [4].

(Advantageous Effect)

According to the present disclosure, it is possible to obtain recovered carbon black that enables the production of a tire excellent in breaking resistance and excellent in reinforcing characteristic.

By using a rubber composition containing the recovered carbon black, it is possible to obtain a tire excellent in breaking resistance and excellent in reinforcing characteristic.

DETAILED DESCRIPTION

[Recovered Carbon Black]

The recovered carbon black of the present disclosure has a carbon content of 85 mass% or more and 97 mass% or less, an ash content of 0.5 mass% or more and 10 mass% or less, and a statistical thickness specific surface area of 50 m$^2$/g or more. The recovered carbon black having the above-described properties in a rubber composition enables the production of a tire excellent in breaking resistance and excellent in reinforcing characteristic.

In the present disclosure, "recovered carbon black" refers to carbon black obtained by recovering carbon black from waste materials subjected to recycling. The above-described waste subjected to recycling refers to rubber products, represented by used rubber and used tires, containing carbon black. "Recovered carbon black" differs from carbon black produced directly from hydrocarbons such as petroleum or natural gas, that is, carbon black that is not recycled. It should be noted that "used" in this context includes not only materials that were discarded after actual use, but also materials that were manufactured but discarded without actual use.

The recovered carbon black of the present disclosure is recovered carbon black obtained from pyrolysis residue generated by thermally decomposing rubber products containing carbon black. When rubber products containing carbon black are thermally decomposed, pyrolysis residue and volatile components (oil) are generated, and recovered carbon black can be recovered from either of these. However, the recovered carbon black of the present disclosure does not include carbon black recovered from the oil.

The pyrolysis residue obtained by thermally decomposing waste such as used rubber and used tires contains ash in addition to carbon black. The ash originates from non-volatile components contained in the rubber and tires. Specifically, the ash contains zinc oxide, zinc sulfide, silica, iron compounds (iron oxides), calcium oxide, aluminum oxide, magnesium oxide, and the like. The amount of ash contained in the recovered carbon black varies depending on the content of non-volatile components contained in used rubber and used tires. In the case of recovered carbon black produced from pyrolysis residue obtained by thermally decomposing waste, even when various processes to remove ash are performed, a certain amount of ash remains. Therefore, recovered carbon black obtained from such pyrolysis residue tends to have a high ash content and a relatively low content of carbon black.

In contrast, the recovered carbon black of the present disclosure is required to have a carbon content of 85 mass% or more and 97 mass% or less, and an ash content of 0.5 mass% or more and 10 mass% or less. In other words, the recovered carbon black of the present disclosure tolerates the presence of ash while increasing the content of carbon black. It should be noted that the above carbon content is a value excluding adsorbed moisture.

When the carbon content in the recovered carbon black is less than 85 mass%, it is not possible to obtain a tire excellent in reinforcing characteristic while maintaining breaking resistance. In view of the breaking resistance and reinforcing characteristic of tires produced using recovered carbon black, the higher the carbon content, the more preferable. Specifically, the carbon content is preferably 85 mass% or more, more preferably 87 mass% or more, even more preferably 89 mass% or more, and still even more preferably 91 mass% or more. Accordingly, the recovered carbon black of the present disclosure has a carbon content of 85 mass% or more and 97 mass% or less, more preferably 87 mass% or more and 97 mass% or less, even more preferably 89 mass% or more and 97 mass% or less, and still even more preferably 91 mass% or more and 97 mass% or less.

Further, when the ash content in the recovered carbon black is higher than 10 mass%, it is not possible to obtain a tire having sufficient reinforcing characteristic. In view of the reinforcing characteristic of the tire, the ash content is preferably 6.5 mass% or less, more preferably 5 mass% or less. In other words, the recovered carbon black of the present disclosure has an ash content of preferably 0.5 mass% or more and 6.5 mass% or less, more preferably 0.5 mass% or more and 5 mass% or less.

The recovered carbon black recovered from the volatile components (oil) generated by thermal decomposition has a low ash content and a relatively high carbon content because the amount of impurities contained in the volatile components is small. Carbon black that is not recycled and is produced from hydrocarbons as raw materials (hereinafter, sometimes referred to as "ordinary carbon black") also has a high carbon content. The carbon content of these carbon blacks is about 98 mass% or more (excluding adsorbed moisture). Accordingly, the recovered carbon black of the present disclosure can be said to be different from ordinary carbon black and recovered carbon black produced by different production methods.

Additionally, the recovered carbon black of the present disclosure is required to have a statistical thickness specific surface area (STSA) of 50 $m^2$/g or more.

Generally, the statistical thickness specific surface area tends to be increased as the particle size of carbon black is reduced. If the statistical thickness specific surface area is less than 50 $m^2$/g, the reinforcing characteristic of the tire cannot be sufficiently improved. By using carbon black having a large statistical thickness specific surface area of 50 $m^2$/g or more, it becomes possible to achieve breaking resistance equal to or greater than that obtained by using ordinary carbon black and to significantly improve the reinforcing characteristic. In view of the reinforcing characteristic, the statistical thickness specific surface area is preferably 60 $m^2$/g or more. The upper limit of the statistical thickness specific surface area is not particularly limited, but in view of other physical properties required for tires, such as rolling resistance, the statistical thickness specific surface area of the recovered carbon black is preferably 200 $m^2$/g or less. In other words, the statistical thickness specific surface area of the recovered carbon black of the present disclosure is preferably 50 $m^2$/g or more and 200 $m^2$/g or less, and more preferably 60 $m^2$/g or more and 200 $m^2$/g or less.

It should be noted that the statistical thickness specific surface area (STSA) is a value measured in accordance with ISO CD 4652-2/3.

[Production Method of Recovered Carbon Black]

The recovered carbon black of the present disclosure is produced from pyrolysis residue generated by thermally decomposing rubber products containing carbon black.

The production method of the recovered carbon black of the present disclosure includes a step of thermally decomposing rubber products containing carbon black and a step of obtaining recovered carbon black from pyrolysis residue.

In the present disclosure, the rubber products containing carbon black as the raw materials are, for example, used tires. The used tires are preferably those collected from large vehicles such as trucks and buses, or from passenger vehicles.

The rubber products may be crushed in advance before the thermal decomposition step.

In the thermal decomposition step, thermal decomposition of the rubber products containing carbon black can be performed using known apparatus. For example, fuel, nitrogen, and the rubber products are introduced into a thermal decomposition furnace, and thermal decomposition is performed. As a result of this thermal decomposition step, pyrolysis residue and volatile components are generated from the rubber products.

After the thermal decomposition step, the pyrolysis residue and volatile components are separated by a known method. The volatile components become oil (decomposition oil) by cooling.

The separated pyrolysis residue is recovered. If necessary, impurities such as zinc oxide, silica, and iron compounds (iron oxides) are removed from this pyrolysis residue to recover recovered carbon black. A known method can be used as the method for removing impurities. It is possible to obtain recovered carbon black that satisfies the above-described ash content by carrying out such an impurity removal step, even if the content of ash in the obtained pyrolysis residue is high.

[Rubber Composition]

The rubber composition of the present disclosure can be a rubber composition generally used for tire production, as long as it contains the above-described recovered carbon black. Each component will be described below.

<Rubber Component>

In the rubber composition of the present disclosure, the type of rubber is not particularly limited. Examples include natural rubber (NR), polyisoprene rubber (IR), polybutadiene rubber (BR), styrene-butadiene copolymer rubber (SBR), butyl rubber (IIR), ethylene-propylene-diene copolymer (EPDM), acrylonitrile-butadiene copolymer (NBR), and rubbers obtained by combining these.

<Filler>

The rubber composition of the present disclosure contains a filler for reinforcing the rubber composition.

In the present disclosure, the rubber composition contains the above-mentioned recovered carbon black. The compounding amount of the recovered carbon black in the rubber composition can be appropriately adjusted depending on the part of the tire to which the resulting rubber is applied. For example, the compounding amount of the recovered carbon black can be adjusted within the range of 1 to 150 parts by mass per 100 parts by mass of the rubber component.

By using the rubber composition containing the recovered carbon black of the present disclosure, the reinforcing characteristic can be improved while maintaining the breaking resistance of the tire.

In the present disclosure, the rubber composition can contain ordinary carbon black, in addition to the above-described recovered carbon black. When ordinary carbon black is used, the grade thereof is not particularly limited. From the viewpoint of promoting the use of recycled materials, it is preferable that the compounding amount of ordinary carbon black is as low as possible, and it is particularly preferable that ordinary carbon black is not included. Furthermore, it is preferable that the compounding amount of ordinary carbon black is less than the compounding amount of the recovered carbon black. However, depending on the specifications required for the rubber product, the compounding amount of ordinary carbon black may be higher than that of the recovered carbon black. The compounding amount of ordinary carbon black can be adjusted within the range of 0 to 150 parts by mass per 100 parts by mass of the rubber component, for example. In this case, the mass ratio of the ordinary carbon black to the recovered carbon black (ordinary carbon black/recovered carbon black) is preferably within the range of 95/5 to 0/100.

The rubber composition of the present disclosure may also include silica or an inorganic filler other than silica as a filler. The type of filler other than carbon black and the compounding amount of each filler can be appropriately selected depending on the part of the tire to which it is applied.

In the present disclosure, the type of silica is not particularly limited, and examples include wet silica (hydrated silica), dry silica (anhydrous silica), calcium silicate, aluminum silicate, and among these, wet silica is preferred. These types of silica may be used alone or in combination of two or more types.

Additionally, in the present disclosure, the physical properties of the silica used, such as BET specific surface area and cetyltrimethylammonium bromide specific surface area (CTAB), are not particularly limited and can be appropriately selected according to the performance of the tire obtained from the rubber composition.

In addition, the compounding amount of silica in the rubber composition is not particularly limited and can be appropriately selected according to the performance required for the tire.

In the present disclosure, the type of inorganic filler is not particularly limited, and for example, clay, talc, calcium carbonate, aluminum hydroxide, and the like can be used. These inorganic fillers can be appropriately selected in consideration of their various physical properties.

<Various Components>

The rubber composition used in the present disclosure may contain, as needed, various components commonly used in the rubber industry, within a range that does not impair the effects of the present disclosure. Examples of such components include stearic acid, antioxidants, zinc oxide, vulcanizing agents, vulcanization accelerators, resins, oils, and silane coupling agents.

[Tire]

The tire of the present disclosure is manufactured using the rubber composition containing the above-mentioned recovered carbon black. In particular, the rubber composition of the present disclosure is preferably applied to, but is not limited to, the tread, base, side, inner liner, bead, stiffener, and the like. By using the recovered carbon black of the present disclosure, it is possible to improve the reinforcing characteristic while providing excellent breaking resistance of the tire.

The compounds described in this specification other than the recovered carbon black may be partially or entirely derived from fossil resources, biological resources such as plant resources, or recycled resources such as used tires. Alternatively, they may be derived from a mixture of two or more of fossil resources, biological resources, and recycled resources.

EXAMPLES

[Production of Raw Material Rubber]

The ingredients were kneaded according to the formulation listed in Table 1 below to prepare rubber compositions. The kneading was performed in two stages. The amount of each component blended at each kneading stage is summarized in Table 1. The unit of numerical values in the formulations in Table 1 is parts by mass. The prepared rubber composition was vulcanized at 145°C to produce raw material rubber.

[Table 1]

| | | Raw material rubber A | Raw material rubber B | Raw material rubber C | Raw material rubber D |
|---|---|---|---|---|---|
| First stage of kneading | NR (parts by mass) | 100 | 100 | 100 | 100 |
| | CB 1 (parts by mass) | 30 | 60 | 60 | 60 |
| | CB 2 (parts by mass) | 15 | - | - | - |
| | CB 3 (parts by mass) | 15 | - | - | - |
| | Stearic acid (parts by mass) | 2 | 2 | 2 | 2 |
| | Wax (parts by mass) | 1 | 1 | 1 | 1 |
| | Zinc oxide (parts by mass) | 1 | 1 | - | - |
| | Antioxidant 1 (parts by mass) | 1 | 1 | 1 | 1 |
| Second stage of kneading | Zinc oxide (parts by mass) | 2.5 | 2.5 | 1.75 | - |
| | Antioxidant 2 (parts by mass) | 0.3 | 0.3 | 0.3 | 0.3 |
| | Vulcanization accelerator 1 (parts by mass) | 1.4 | 1.4 | 1.4 | 1.4 |
| | Sulfur (parts by mass) | 1.16 | 1.16 | 1.16 | 1.16 |
| | Retarder (parts by mass) | 0.12 | 0.12 | 0.12 | 0.12 |

The details of the ingredients in Table 1 are as follows.

NR: Natural rubber, RSS #3
CB1: Carbon black, Seast 3 manufactured by Tokai Carbon Co., Ltd.
CB2: Carbon black, Seast F manufactured by Tokai Carbon Co., Ltd.
CB3: Carbon black, N660
Stearic acid: Kiri-jirushi Stearic Acid manufactured by NOF Corporation
Wax: Santite A manufactured by Seiko Chemical Co., Ltd.
Zinc Oxide: Two types of zinc oxide manufactured by Hakusui Tec Co., Ltd.
Antioxidant 1: Antigen 6C manufactured by Sumitomo Chemical Co., Ltd.
Antioxidant 2: NONFLEX RD manufactured by Seiko Chemical Co., Ltd.
Vulcanization accelerator 1: Sanceler CM-G manufactured by Sanshin Chemical Industry Co., Ltd.
Sulfur: HK200-5 manufactured by Hosoi Chemical Industry Co., Ltd.
Retarder: Retarder CTP manufactured by Toray Fine Chemicals Co., Ltd.

[Production of Recovered Carbon Black]

Recovered carbon blacks 2 to 6 were produced using raw material rubbers A to D through the following steps.
Each raw material rubber was charged into a nitrogen-substituted metal container. Subsequently, the metal container was placed in an electric furnace heated to the temperature summarized in Table 2, and thermal decomposition was performed under a nitrogen gas stream. The oil generated by thermal decomposition during heating was collected with a trap, and heating was stopped when oil generation visually ceased. After the heating was stopped, the system was cooled to room temperature and the metal container was taken out from the electric furnace. The residue inside the metal container was collected to obtain recovered carbon blacks 2 to 6.
As recovered carbon black 1, a commercially available recovered carbon black was prepared.
In Table 2, "recovered carbon black" is abbreviated as "r-CB".

[Evaluations of Recovered Carbon Black]

1. Carbon Content and Ash Content

The carbon content and ash content of the recovered carbon blacks 1 to 6 were measured by thermogravimetric analysis (TGA).

The sample was heated from room temperature to 550°C under a nitrogen atmosphere, and then heating was continued to maintain 550°C under an air atmosphere to measure weight loss. The weight loss (mass %) during heating from room temperature to 550°C under nitrogen atmosphere was defined as "weight loss 1", and the weight loss (mass %) during heating while maintaining 550°C under air atmosphere was defined as "weight loss 2". The weight loss 2 was regarded as the carbon content. The ash content was calculated by the following formula:

$$\text{Ash content (mass \%)} = 100 - \text{weight loss 1} - \text{weight loss 2}$$

The results are summarized in Table 2. In Table 2, the carbon contents are expressed with three significant figures. The ash contents are expressed with two significant figures.

2, Statistical Thickness Specific Surface Area (STSA)

The statistical thickness specific surface area (STSA) of each of the recovered carbon blacks 1 to 6 was measured in accordance with ISO CD 4652-2/3. The results are summarized in Table 2. In Table 2, STSAs are expressed with two significant figures.

[Table 2]

|  | r-CB1 | r-CB2 | r-CB3 | r-CB4 | r-CB5 | r-CB6 |
|---|---|---|---|---|---|---|
| Raw material rubber | - | A | A | B | C | D |
| Heating temperature (°C) | - | 450 | 500 | 500 | 500 | 500 |
| Carbon content (mass%) | 76.1 | 86.1 | 90.6 | 89.5 | 91.9 | 94.7 |
| Ash content (mass%) | 20 | 7.7 | 7.9 | 7.2 | 5.2 | 2.3 |
| Statistical thickness specific surface area ($m^2$/g) | 57 | 46 | 54 | 69 | 68 | 64 |

As summarized in Table 2, the recovered carbon black 1 (r-CB1, commercially available recovered carbon black) had lower carbon content and higher ash content than the recovered carbon blacks 2 to 6 (r-CB2 to 6).

The recovered carbon black 2 had a small statistical thickness specific surface area.

The recovered carbon blacks 4 to 6 were prepared by varying the content of zinc oxide in the raw material rubber. In other words, as the content of zinc oxide increased, the ash content was increased and the carbon content tended to decrease relatively.

[Production of Rubber Using Recovered carbon black]

The ingredients were kneaded according to the formulation listed in Table 3 below to prepare rubber compositions. The kneading was performed in two stages. Table 3 summarizes the amount of each component blended at each kneading stage. The unit of numerical values in the formulations in Table 3 is parts by mass. The prepared rubber composition was vulcanized at 145°C to obtain the rubber of examples and comparative examples.

The details of the ingredients in Table 3 are as follows.

SBR: Styrene-butadiene rubber, SBR1500
r-CB1 to 6: Recovered carbon blacks 1 to 6 described above
Stearic acid: Kiri-jirushi Stearic Acid manufactured by NOF Corporation
Antioxidant 1: Antigen 6C manufactured by Sumitomo Chemical Co., Ltd.
Antioxidant 2: NONFLEX RD manufactured by Seiko Chemical Co., Ltd.
Zinc Oxide: Two types of zinc oxide manufactured by HakusuiTec Co., Ltd.
Vulcanization accelerator 2: Soxinol D manufactured by Sumitomo Chemical Co., Ltd.
Vulcanization accelerator 3: Sanceler NS-G manufactured by Sanshin Chemical Industry Co., Ltd.
Vulcanization accelerator 4: Sanceler DM-TG manufactured by Sanshin Chemical Industry Co., Ltd.
Sulfur: HK200-5 manufactured by Hosoi Chemical Industry Co., Ltd.

[Performance Evaluations of Vulcanized Rubber]

1. Breaking Resistance

The tensile strength (TB) was measured by conducting a tensile test on the vulcanized rubber of each of the examples and comparative examples at room temperature in accordance with JIS K6251:2017. The breaking resistance was expressed as an index according to the following formula by taking the tensile strength of the test specimen of Comparative Example 1 as 100:

Breaking resistance index = (Tensile strength of test specimen other than Comparative Example 1 / Tensile strength of test specimen of Comparative Example 1) × 100.

A higher destruction resistance index indicates that the vulcanized rubber was more resistant to breakage and exhibited superior destruction resistance. The results are summarized in Table 3.

2. Reinforcing Characteristic

The tensile strength (TB) was measured by conducting a tensile test on the vulcanized rubber of each of the examples and comparative examples at room temperature in accordance with JIS K6251:2017. Using the tensile strength at 300% strain of the vulcanized rubber of each of the examples and comparative examples, the reinforcing characteristic was expressed using the following formula, based on Comparative Example 1:

Reinforcing characteristic index = (Tensile strength at 300% strain of test specimen other than Comparative Example 1 / Tensile strength at 300% strain of test specimen of Comparative Example 1) × 100.

A higher reinforcing characteristic index indicates a better reinforcing characteristic. The results are summarized in Table 3.

[Table 3]

| | Formulation | Comp. Ex. 1 | Comp. Ex. 2 | Ex. 1 | Ex. 2 | Ex. 3 | Ex. 4 |
|---|---|---|---|---|---|---|---|
| First stage of kneading | SBR (parts by mass) | 100 | 100 | 100 | 100 | 100 | 100 |
| | r-CB1 (parts by mass) | 50 | - | - | - | - | - |
| | r-CB2 (parts by mass) | - | 50 | - | - | - | - |
| | r-CB3 (parts by mass) | - | - | 50 | - | - | - |
| | r-CB4 (parts by mass) | - | - | - | 50 | - | - |
| | r-CB5 (parts by mass) | - | - | - | - | 50 | - |
| | r-CB6 (parts by mass) | - | - | - | - | - | 50 |
| | Stearic acid (parts by mass) | 2 | 2 | 2 | 2 | 2 | 2 |
| | Antioxidant 1 (parts by mass) | 1 | 1 | 1 | 1 | 1 | 1 |
| | Antioxidant 2 (parts by mass) | 1 | 1 | 1 | 1 | 1 | 1 |

(continued)

| Formulation | | Comp. Ex. 1 | Comp. Ex. 2 | Ex. 1 | Ex. 2 | Ex. 3 | Ex. 4 |
|---|---|---|---|---|---|---|---|
| Second stage of kneading | Zinc oxide (parts by mass) | 3 | 3 | 3 | 3 | 3 | 3 |
| | Vulcanization accelerator 2 (parts by mass) | 0.6 | 0.6 | 0.6 | 0.6 | 0.6 | 0.6 |
| | Vulcanization accelerator 3 (parts by mass) | 0.6 | 0.6 | 0.6 | 0.6 | 0.6 | 0.6 |
| | Vulcanization accelerator 4 (parts by mass) | 0.6 | 0.6 | 0.6 | 0.6 | 0.6 | 0.6 |
| | Sulfur (parts by mass) | 1.5 | 1.5 | 1.5 | 1.5 | 1.5 | 1.5 |
| Evaluation results | Breaking resistance (Index) | 100 | 100 | 104 | 120 | 125 | 126 |
| | Reinforcing characteristic (Index) | 100 | 121 | 162 | 203 | 219 | 228 |

When the breaking resistance was 100 or more and the reinforcing characteristic was 160 or more, the sample was judged as "Pass".

As summarized in Table 3, Examples 1 to 4 met a breaking resistance index of 100 or higher and a reinforcing characteristic of 160 or higher. It can be understood that Examples 1 to 4 achieved equivalent or better breaking resistance and significantly improved reinforcing characteristic, compared to Comparative Example 1 using the recovered carbon black 1 with a low carbon content and a high ash content. On the other hand, Comparative Example 2 using the recovered carbon black 2 with a small statistical thickness specific surface area could not sufficiently improve the reinforcing characteristic.

**Claims**

1. Recovered carbon black having a carbon content of 85 mass% or more and 97 mass% or less, an ash content of 0.5 mass% or more and 10 mass% or less, and a statistical thickness specific surface area of 50 $m^2/g$ or more.

2. The recovered carbon black according to claim 1, obtained from pyrolysis residue generated by thermally decomposing a rubber product containing carbon black.

3. The recovered carbon black according to claim 1 or claim 2, wherein the ash content is 5 mass% or less.

4. A rubber composition comprising the recovered carbon black according to claim 1 or claim 2.

5. A tire comprising the rubber composition according to claim 4.

# INTERNATIONAL SEARCH REPORT

<table>
<tr><td>International application No.<br>**PCT/JP2023/040956**</td></tr>
</table>

## A. CLASSIFICATION OF SUBJECT MATTER

**C09C 1/48**(2006.01)i; **B60C 1/00**(2006.01)i; **C01B 32/05**(2017.01)i; **C08J 11/12**(2006.01)i; **C08K 3/04**(2006.01)i; **C08L 21/00**(2006.01)i

FI:  C09C1/48; C08K3/04; C08L21/00; B60C1/00 Z; C01B32/05 ZAB; C08J11/12

According to International Patent Classification (IPC) or to both national classification and IPC

## B. FIELDS SEARCHED

Minimum documentation searched (classification system followed by classification symbols)

C09C1/48; B60C1/00; C01B32/05; C08J11/12; C08K3/04; C08L21/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2017-008223 A (BRIDGESTONE CORP.) 12 January 2017 (2017-01-12) | 1, 3-5 |
|   | claims, paragraph [0032], examples | |
| Y | | 1, 3-5 |
| X | CN 111455183 A (SHENYANG XIN DI ENVIRONMENT TECHNOLOGY CO., LTD.) 28 July 2020 (2020-07-28) | 1-5 |
|   | claims, paragraph [0001], examples | |
| Y | | 1-5 |
| X | CN 115073940 A (ANHUI GURUITE NEW MATERIAL TECHNOLOGY CO., LTD.) 20 September 2022 (2022-09-20) | 1-5 |
|   | claims, examples, paragraph [0002] | |
| Y | | 1-5 |

☑ Further documents are listed in the continuation of Box C.   ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
**16 January 2024**

Date of mailing of the international search report
**30 January 2024**

Name and mailing address of the ISA/JP
**Japan Patent Office (ISA/JP)**
**3-4-3 Kasumigaseki, Chiyoda-ku, Tokyo 100-8915**
**Japan**

Authorized officer

Telephone No.

Form PCT/ISA/210 (second sheet) (July 2022)

**INTERNATIONAL SEARCH REPORT**

International application No.

**PCT/JP2023/040956**

### C. DOCUMENTS CONSIDERED TO BE RELEVANT

| Category* | Citation of document, with indication, where appropriate, of the relevant passages | Relevant to claim No. |
|---|---|---|
| Y | CN 110760204 A (ZHUHAI GREE GREEN RENEWABLE RESOURCES CO., LTD.) 07 February 2020 (2020-02-07) claims, paragraph [0001], examples | 1-5 |
| Y | JP 2017-088670 A (BRIDGESTONE CORP.) 25 May 2017 (2017-05-25) paragraph [0028] | 1-5 |
| Y | US 2014/371385 A1 (BLACK BEAR CARBON B. V.) 18 December 2014 (2014-12-18) paragraph [0158] | 1-5 |

Form PCT/ISA/210 (second sheet) (July 2022)

**INTERNATIONAL SEARCH REPORT**
Information on patent family members

International application No.

**PCT/JP2023/040956**

| Patent document cited in search report | | | Publication date (day/month/year) | Patent family member(s) | | | Publication date (day/month/year) |
|---|---|---|---|---|---|---|---|
| JP | 2017-008223 | A | 12 January 2017 | (Family: none) | | | |
| CN | 111455183 | A | 28 July 2020 | (Family: none) | | | |
| CN | 115073940 | A | 20 September 2022 | (Family: none) | | | |
| CN | 110760204 | A | 07 February 2020 | (Family: none) | | | |
| JP | 2017-088670 | A | 25 May 2017 | (Family: none) | | | |
| US | 2014/0371385 | A1 | 18 December 2014 | WO | 2013/095145 | A1 | |
| | | | | EP | 2794766 | A1 | |
| | | | | CN | 104125988 | A | |
| | | | | BR | 112014014978 | A | |
| | | | | ES | 2675128 | T | |
| | | | | PL | 2794766 | T | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012162672 A
- JP 2012001682 A
- JP 2017008223 A